# EUROPEAN PATENT SPECIFICATION

(11) **EP 4 380 414 B1**
(45) Date of publication and mention of the grant of the patent: **06.11.2024**
(21) Application number: 22823131.2
(22) Date of filing: 20.12.2022
(51) Int. Cl.: A47J 31/30, A47J 31/06

(54) **MOKA POT INCLUDING AN ADAPTER FOR A FUNNEL FILTER**
MOKA-TOPF MIT EINEM ADAPTER FÜR EINEN TRICHTERFILTER
CAFETIÈRE MOKA AVEC ADAPTEUR POUR UN FILTRE D'ENTONNOIR

(30) Priority: 15.02.2022 IT 202200002789
(43) Date of publication of application: 12.06.2024
(73) Proprietor: Fruzzetti, Alain, 6528 Camorino (CH); Casanova, Flavio, 6500 Bellinzona (CH)
(72) Inventor: Fruzzetti, Alain, 6528 Camorino (CH); Casanova, Flavio, 6500 Bellinzona (CH)
(74) Representative: M. Zardi & Co S.A.
(86) International application number: PCT/EP2022/087006
(87) International publication number: WO 2023/156048

(56) References cited:
- WO-A1-2021/144469
- AT-B- 205 188
- ES-A1- 2 402 966
- IT-A1- 201800 008 151

## Description

### Field of application

The present invention relates to an adapter for a funnel filter of a moka pot, and a corresponding moka pot.

The invention relates in particular to an adapter of the aforementioned type, which allows the same moka pot to be used to make coffee for a different number of persons.

### Prior art

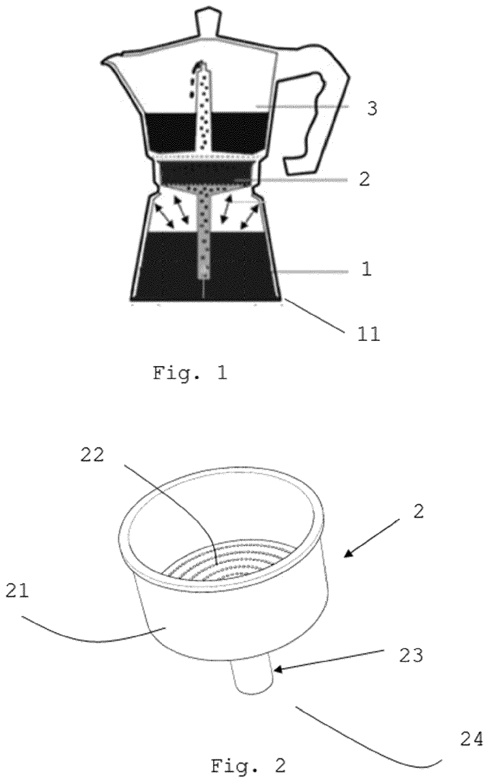

A coffee pot for making coffee, also called moka pot, is known to have three main components of the type shown in Figure 1 and in particular: a boiler 1 designed to receive water to be heated, a funnel filter 2 which can be inserted inside the boiler 1, and a collector 3 which can be mounted on top of the boiler 1 and the funnel filter 2.

The funnel filter 2 is schematically shown in Figure 2. It comprises an upper cylindrical portion 21 of predefined height having a perforated base 22 for receiving the coffee powder. The funnel filter 2 also comprises a lower tube-shaped portion 23 having a proximal end 24 close to the bottom 11 of the boiler 1 and an opposite distal end fixed onto the perforated base 22.

The principle of coffee extraction is per se well-known. The collector collects the coffee extracted by means of the hot water flow from the boiler 1 across the funnel filter 2.

Some adapters for the coffee pot are also known.

The adapters are liked because they allow the same coffee pot to be used to make coffee for a different number of persons. The advantages therefore consist in being able to avoid having to have access to different coffee pots, i.e. a coffee pot for one person, for two people, for six people, etc., and therefore avoid the need for storage space for several coffee pots at home, but also in the possibility of being able to use always the same coffee pot, independently of the number of people, something which, according to coffee experts, ensures the quality of beverage (whereas a coffee pot which has not been used for a long time would affect the aroma of the coffee).

In particular, adapters which consist of a receptacle which can be inserted inside the funnel filter 2 are known.

The receptacle has a capacity which is less than that of the funnel filter 2 and therefore contains a smaller amount of coffee powder. For example, a receptacle for three people, containing half the amount of coffee powder of the funnel filter 2, may be inserted inside the funnel filter 2 of a coffee pot designed for six people.

The aforementioned receptacle has a structure for example with a frustoconical cross-section, having a larger base (which forms the opening of the receptacle) with a diameter substantially the same as the diameter of the upper cylindrical portion 21 of the funnel filter 1 and a lower base having a smaller diameter (for example about half the diameter of the larger base). The smaller base is perforated and, during use (i.e. when the receptacle in inserted inside the funnel filter 2), remains in contact with the perforated base 22 of the funnel filter 2. The space between the side surface of the receptacle, which is also perforated, and the funnel filter 2 (and therefore the space underneath the receptacle) remains empty. The coffee powder is filled only inside the receptacle.

The aforementioned adapters, however, have a number of limitations which affect the preparation of the coffee. The contact between the perforated bases of the funnel filter 2 and the receptacle may prevent the water flowing from the boiler 1. This also occurs because the holes in the bases may not be aligned.

Furthermore, the frustoconical configuration of the adapter causes a distribution of the coffee powder which is non-uniform heightwise: the column of coffee powder situated at the edges of the larger base has a height which is less than that of the powder column situated in the centre of the larger base (and the smaller base). This non-uniform distribution affects the extraction process because a smaller quantity of water flows at the edges of the large base.

Adapter receptacles with a cylindrical structure are also known. These receptacles are again provided with a perforated base and an opening situated opposite the perforated base. The receptacles have a substantially constant diameter which is the same as that of the funnel filter 2, but height which is less than the height of the funnel filter 2 and remain suspended inside the funnel filter 2, owing to a form fit with the edge of the side surface of the funnel filter 2.

Therefore the perforated bases of the funnel filter 2 and the receptacle are spaced apart, during use, and between them there remains an empty space inside which the water flows without touching the coffee powder.

In these adapters, the height of the coffee powder, although being uniform, is always less than the height which the coffee powder would have in the funnel filter 2.

Such prior art devices are described for example in ES 2 402 966 A1, AT 205 188 B and WO 2021/144469 A1. T

The technical problem underlying the present invention is to devise an adapter for a funnel filter of a coffee machine which is able to overcome all the aforementioned limitations - and in particular which allows an optimum preparation of the coffee, without therefore negatively affecting the quality of the beverage - and which is simple to use and practical.

### Summary of the invention

The idea underlying the present invention is that of reducing the useful volume available for filling coffee powder inside the funnel filter of a coffee pot (below also called moka pot) by means of a body with a predefined volume and predefined height, preferably equal to the height of an upper cylindrical portion of the funnel filter.

The body with a predefined volume is configured for the funnel filter of the coffee pot. In particular, the dimensions and the shape of the body with a predefined volume are designed to match the dimensions and the shape of the funnel filter.

For example, an outer (side) surface of the body with a predefined volume has a circular cross-section and makes contact with the (inner) surface of the funnel filter which has a circular cross-section, preventing water from passing between the parts.

The body can be removably inserted into the funnel filter.

Preferably, the hole in the body is intended to remain centred with respect to the upper cylindrical portion.

Preferably, the body is provided with a central through-hole.

However, the body may be provided with a hole which is not central, i.e. a hole which is situated off-centre with respect to the circular cross-section of the outer surface of the body. More than one hole may be provided. For example two or three holes.

Preferably, the hole is a single hole.

Preferably, the hole has a constant diameter.

Preferably, the body is annular, i.e. concentric with the upper cylindrical portion of the funnel filter. The annular body has a uniform thickness.

However, the hole may have a non-uniform diameter. Assuming dc1 indicates the diameter of the annular body at a cross-section s1 and df1 indicates the diameter of the hole at the cross-section s1, the diameter of the annular body at a cross-section s2 may be dc2 and the diameter of the hole at the cross-section s2 may be df2, with dc1<>dc2 and df1<>df2.

According to various embodiments:
- the hole may be situated off-centre with respect to the centre of the funnel filter;
- the hole may have any shape, including irregular shapes;
- more than one hole may be provided, with a regular or irregular shape.

Preferably, the outer side surface of the body makes contact with the inner side surface of the funnel filter.

Advantageously, the height of the column of coffee powder in contact with the body is equal to the height of the upper cylindrical portion of the funnel filter. Advantageously, said height of the coffee power is uniform and allows optimum extraction of the coffee.

According to the aforementioned proposed solution, the technical problem is solved by a coffee pot with adapter.

The coffee pot comprises three main components:
- a boiler designed to receive water to be heated;
- a funnel filter which can be inserted inside the boiler; and
- a collector which can be mounted on top of the boiler and the funnel filter and which is designed to collect coffee extracted by means of the flow of hot water from the boiler across the funnel filter;
the funnel filter comprising an upper cylindrical portion of predefined height having a perforated base for receiving the coffee powder, and a lower tube-shaped portion having a proximal end close to the bottom of the boiler and an opposite distal end on the perforated base.

The adapter comprises at last one body which can be inserted inside the upper cylindrical portion of the filter; the body has a height equal to the height of the upper cylindrical portion and comprises a through-hole.

Preferably, the hole has an axis parallel to the axis of the upper cylindrical portion or is coaxial therewith.

The adapter, and in particular the body, is not a receptacle, like the adapters of the prior art. On the other hand, the adapter according to the present invention is a volume filler device. The body can only contain coffee powder inside a hole (or optionally more than one hole) provided in it.

Preferably, the body comprises at least one first ring with an outer surface designed to make contact with an inner surface of the upper cylindrical portion of the funnel filter.

The first ring also comprises an inner surface which, together with the outer surface, forms a circular rim of predefined thickness, designed to reduce the volume of the funnel filter available for receiving the coffee powder, allowing the powder to be filled only inside a first central sector of the funnel filter, left free by the first ring.

The first ring may be a solid body.

The first ring may, however, be a hollow body and the inner surface and the outer surface of the first ring may be joined together by flat flanges. In particular, the flat flanges comprise:
- an upper flat flange which joins together the top ends of the inner side surface and the outer side surface of the first ring, namely the ends which, during use, are spaced from the perforated base of the funnel filter; and
- a lower flat flange which joins together the bottom ends of the inner side surface and the outer side surface of the first ring, namely the ends which, during use, are substantially in contact with the perforated base of the funnel filter.

The first ring may be made of metal (stainless steel, aluminium alloy, etc.) or food-grade plastic, without any limitations in this respect, i.e. may also be made of another material.

In principle, any material suitable for use in the food sector may be used to make the body. The material of the adapter, therefore, does not limit the scope of protection of the present invention.

A minimum amount of play between the outer side surface and the upper cylindrical portion of the funnel filter is envisaged so that, during preparation of the coffee, the flow of hot water is allowed only through the first central sector of the funnel filter and therefore across the coffee powder, and not between the outer side surface of the first ring and the funnel filter. Preferably, when the parts are assembled together, the outer side surface of the first ring makes pressing contact against the upper cylindrical portion of the funnel filter.

Entirely by way of example, assuming a coffee for n persons (e.g. n=6), the first ring may be an adapter for n-1 persons.

The term "ring", however, is not limiting with regard to the shape. In particular, the outer side surface of the first ring is circular and comes into contact with the inner surface of the upper cylindrical portion of the funnel filter, but the inner side surface of the first ring may have an ovoidal, triangular, quadrangular, polyhedral, regular or irregular shape. Therefore, the hole which is designed to receive coffee powder may have different shapes.

Multiple first rings may be provided for further adaptation of the coffee pot for n persons.

Again by way of example, assuming the coffee pot for n persons indicated above (e.g. n=6), three separate first rings may be provided as adapters for n-1, n-3 and n-4 persons.

In the example given above, the adapters are used separately.

In other words, the coffee pot may be equipped with multiple bodies or volume fillers of different sizes. Each of the bodies forms an adapter. The adapter is provided with a single first ring. Each of said bodies has an outer side surface which makes contact with the inner side surface of the funnel filter. The bodies have a hole with a different diameter (volume). The greater the diameter (volume) of the hole, the smaller will be the reduction in volume performed by the volume. The bodies are used separately, namely, before being able to insert a body inside the funnel filter, each other body must be removed. According to a variation of embodiment of the invention, multiple bodies of an adapter may be combined in order to reduce incrementally the volume available inside the funnel filter, as described below with reference to a second and a third ring.

In particular, at least one second ring, which is concentric with the first ring and can be removably inserted inside the first ring, is provided. The second ring reduces the volume of the funnel filter available for receiving the coffee powder, in particular allowing the powder to be filled only inside a second central sector of the funnel filter left free by the first ring and the second ring. The second central sector has a radius smaller than the first central sector of the funnel filter. The outer side surface of the second ring makes contact with the inner side surface of the first ring. Furthermore, at least one third ring, which is concentric with the second ring and can be removably inserted inside the second ring, is provided. The third ring reduces further the volume of the funnel filter available for receiving the coffee powder, in particular allowing the powder to be filled only inside a third central sector of the funnel filter left free by the first ring, by the second ring and by the third ring. The radius of the third central sector is smaller than the radius of the second central sector of the funnel filter. The outer side surface of the third ring makes contact with the inner side surface of the second ring.

The second and third rings may also be bodies which are solid or internally hollow.

A minimum amount of play between the outer side surface of the second ring and the inner side surface of the first ring is also envisaged so that, during preparation of the coffee, the flow of hot water is allowed only through the second central sector of the funnel filter and across the coffee powder, and not between the outer side surface of the second ring and the inner side surface of the first ring. Similarly, for the same reasons, a minimum amount of play is envisaged between the outer side surface of the third ring and the inner side surface of the second ring.

The term "ring" is not limiting with regard to the shape of the second and third rings. In particular, the outer side surface of the second ring may not be circular and come into contact with the inner surface of the first ring, which in turn may be non-circular and provide a form-fit with the second ring. The same is applicable to the outer side surface of the third ring (which may be circular or non-circular) and come into contact with the inner surface of the second ring, which in turn may be circular or non-circular and provide a form-fit with the third ring).

Therefore, the term "ring" is used to refer to a body having an outer side surface and an inner side surface, which do not necessarily have a regular shape, where the inner side surface delimits a hole, which is not necessarily centred with respect to the body of the ring.

In the various embodiments described above, the adapter rests on the perforated base of the funnel filter. The body of the adapter, namely, has a base which rests on the perforated base of the funnel filter.

Further characteristic features and advantages of the coffee pot according to the present invention will become clear from the following description below, provided with reference to the accompanying drawings purely by way of a non-limiting example of the present invention.

### Brief description of the attached drawings

Figure 1 is a schematic view of a coffee pot for making coffee, according to the prior art, comprising a known funnel filter.
Figure 2 is a perspective view of the funnel filter of the coffee pot according to Figure 1.
Figure 3 is a perspective view of a funnel filter of a coffee pot and an adapter according to the present invention, with the parts separated from each other.
Figure 4 is a perspective view of the funnel filter and the adapter of the coffee pot according to the present, with the parts assembled.
Figures 5 to 7 are top plan views of an adapter of the coffee pot according to different embodiments of the present invention.
Figure 8 is a top plan view of the funnel filter of the coffee pot and Figures 8a to 8f are top plan views of adapters for the funnel filter according to Figure 8, with the parts separated; each adapter is characterized by a particular shape, position, size and number of the holes designed to receive coffee powder inside the adapter and, consequently, inside the funnel filter.
Figures 9a to 9f are top plan views of the adapters according to Figures 8a-8f when they are inserted inside the funnel filter according to Figure 8; one adapter at a time is inserted inside the funnel filter.
Figure 10 is a top plan view of an adapter according to an embodiment of the present invention.
Figure 11 is a top plan view of an adapter according to another embodiment of the present invention.

### Detailed description of the invention

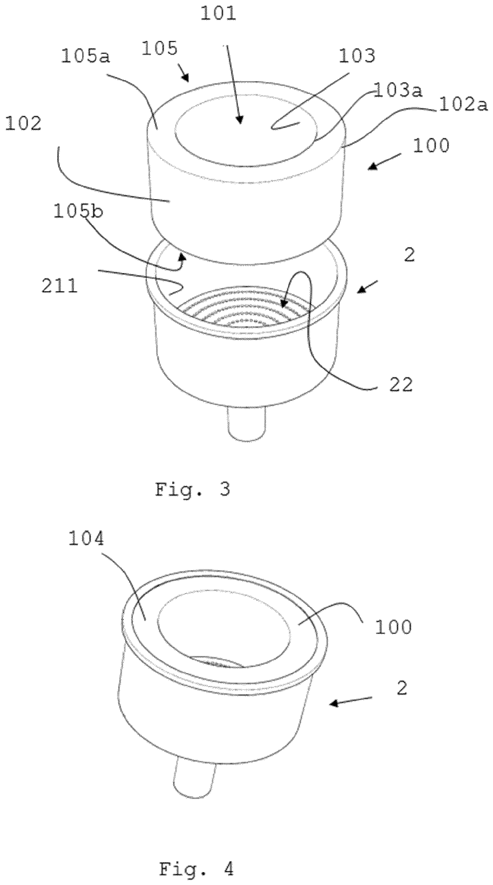

With reference to Figures 3 to 7 below an adapter 100 of a coffee pot according to the present invention is described.

The adapter 100 can be inserted inside a funnel filter of the coffee pot or moka pot of the type shown in Figure 1 and in particular a moka pot having three main components:
- a boiler 1 for receiving water to be heated;
- the funnel filter 2 which can be inserted inside the boiler 1; and
- a collector 3, which can be mounted on top of the boiler 1 and the funnel filter 2.

The funnel filter 2 comprises an upper cylindrical portion 21 of predefined height. The upper cylindrical portion 21 has a perforated base 22 and is designed to receive the coffee powder
The funnel filter 2 also comprises a lower tube-shaped portion 23 having a proximal end 24 close to the bottom 11 of the boiler 1, by means of which it draws off hot water, and an opposite distal end, fixed onto the perforated base 22, by means of which the water is supplied towards the coffee powder.

The coffee is extracted from the coffee powder by means of the flow of hot water inside the funnel filter 2 and by means of a vertical duct in the collector 3 and flows over into the collector 3 from the vertical duct.

With reference to Figure 3, this shows an adapter 100 according to the present invention, having a ring-like form.

The adapter 100 also has the form of a hollow cylinder. The cylinder is hollow since it has a central hole 101 formed in it.

The outer diameter of the hollow cylinder is substantially equal to the inner diameter of the upper cylindrical portion 21 of the funnel filter 2. Therefore, an outer side surface 102 of the hollow cylinder is in contact, during use, with an inner side surface 211 of the upper cylindrical portion 21 of the funnel filter 2.

The hollow cylinder of the adapter 100 is coaxial with the upper cylindrical portion 21 of the funnel filter 2.

The hollow cylinder has a predetermined thickness. An inner side surface 103 of the hollow cylinder is spaced by a predefined amount from the outer side surface 102 of the hollow cylinder.

Internally (between the side surfaces 102, 103) the hollow cylinder may be void. In this case, the inner side surface 103 of the hollow cylinder is joined to the outer side surface 102 of the hollow cylinder by means of flat flanges 105 so as to delimit a closed space inside which the coffee powder may not enter.

In particular (Fig. 3) an upper flat flange 105a joins together the top ends 103a, 102a of the inner side surface 103 and the outer side surface 102 of the first ring 100, namely the ends 103a, 1032a which, during use, are spaced from the perforated base 22 of the funnel filter 2.

A lower flat flange 105b (see Fig. 3 again) joins together the bottom ends of the inner side surface 103 and the outer side surface 102 of the first ring 100, namely the ends which, during use, are substantially in contact with the perforated base 22 of the funnel filter 2.

The hollow cylinder may also be solid (between the side surfaces 102, 103).

In particular, the body 100 may be made as one piece, for example by means of moulding or casting.

When the parts are assembled together, the bottom surface of the body 100 rests on the perforated base of the funnel filter, closing off the perforations, the outer side surface of the body 100 makes contact with the inner side surface of the funnel filter, preventing water from passing through, and the top surface of the body 100 is flush with the top edge of the funnel filter, allowing the coffee powder to be filled only inside the hole of the body 100.

Preferably, the body 100 is a ring having a base portion in contact with part of the perforated base 22 of the upper cylindrical portion 21 of the funnel filter 2, so as to prevent the flow of fluid from the boiler 1 to the collector 3 through said part of the perforated base 22, an outer side surface in contact with an inner side surface of the funnel filter 2 so as to prevent the flow of fluid between the outer side surface and the inner side surface, and a top portion flush with a top edge of the funnel filter 2, so that the coffee powder is filled only within the through-hole 101 and not on top of the ring and so that the fluid flow is allowed only through a remaining part of the perforated base 22 which is free from the base portion of the ring.

Figure 3 shows the adapter 100 during insertion inside the funnel filter 2.

In Figure 4 the adapter 100 inserted inside the funnel filter 2.

It is clear from Figure 4 that the coffee powder may be filled only in the space left free by the central through-hole 101 of the adapter 100, inside the funnel filter 2. The column of coffee powder in this space may have the same height as the upper cylindrical portion 21 of the funnel filter 2.

The column of coffee powder (not shown) which is formed in this space is coaxial with the funnel filter 2. The height of the column is uniform.

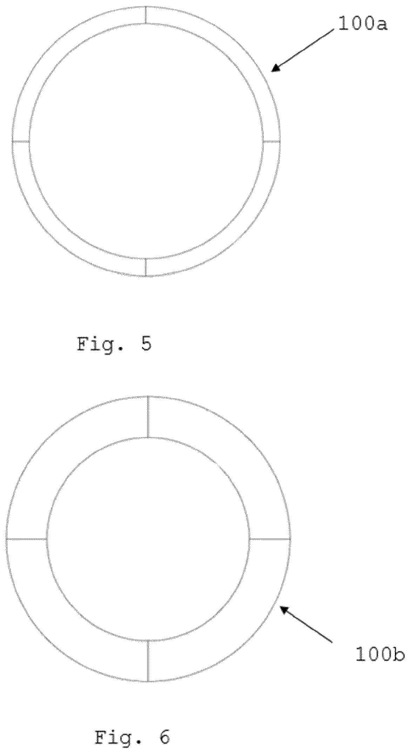

Figures 5 to 7 show three adapters 100a, 100b, 100c for a same moka pot, provided only by way of a non-limiting example of the present invention.

The three adapters 100a, 100b, 100c have been made by the Applicant as prototypes for a moka pot already available on the market, for test purposes.

The dimensions of the adapters 100a, 100b, 100c have been defined on based on the dimensions of the funnel filter 2 of the test moka pot.

These dimensions may vary depending on the manufacturers of the moka pot. For example, a moka pot for three persons made by a moka pot manufacturer A may have a funnel filter 2 with dimensions (diameter, radius, thickness of side walls, etc.) which are different from the dimensions of a funnel filter of a moka pot for three persons made by another manufacturer B.

In the example illustrated, each of the adapters 100a, 100b, 110c has preferably a height of 28 mm, substantially corresponding to the height of the funnel filter 2 of the test moka pot.

The outer side surface has a diameter of 58 mm, for each of the adapters 100a, 100b, 100c, substantially corresponding to the diameter of the funnel filter 2 of the test moka pot.

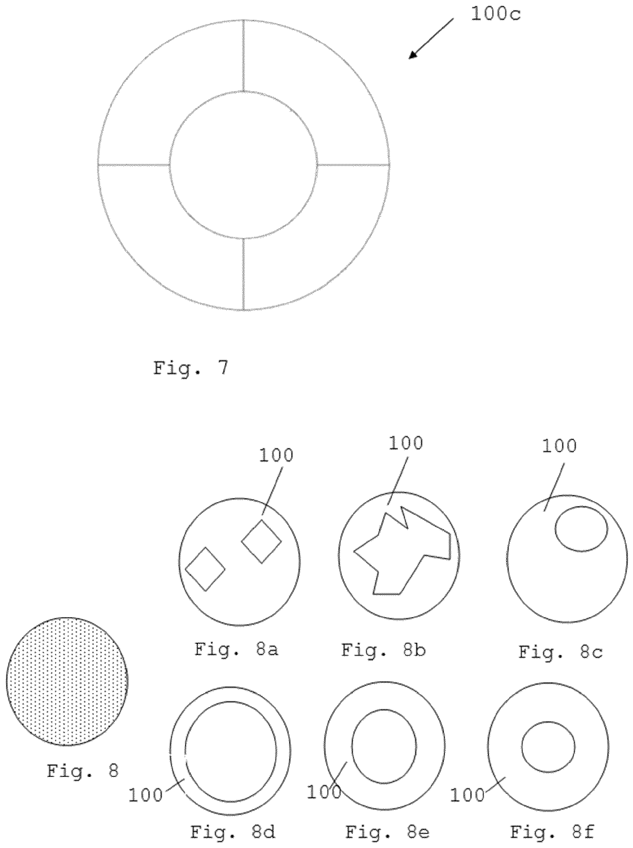

The inner side surface has a diameter, respectively, of 50.60 mm (Fig. 5, adapter 100a), 41.40 mm (Fig. 6, adapter 100b) and 29.40 mm (Fig. 7, adapter 100c).

Operationally speaking, the user may prepare the coffee using the moka pot, without any adapter, or using any one of the adapters 100a, 100b, 100c, depending on the number of persons for whom the coffee is to be prepared.

In any case, the height of the coffee powder column remains unvaried, as does the quality of the coffee and its aroma.

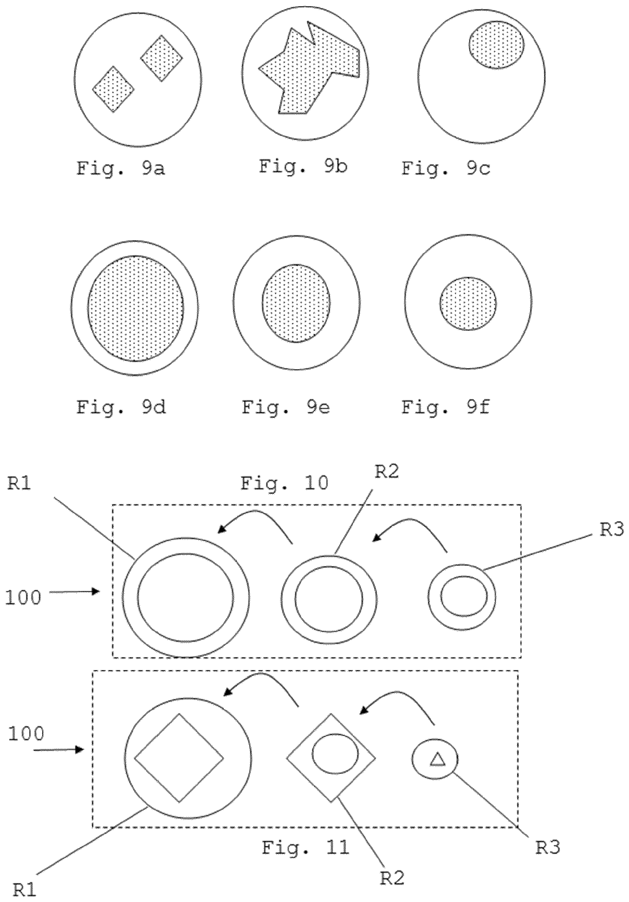

Figures 8a-8f and 10, 11 show an adapter for a coffee pot according to various embodiments, all of which fall within the scope of protection of the present invention. Figure 8a shows an adapter which comprises a single body 100 designed to reduce the volume for receiving coffee power inside the funnel filter. The body 100 has two holes. The holes are situated off-centre with respect to the centre of the funnel filter. The holes have a quadrangular shape. When the parts (adapter/filter) are assembled together, as shown in Figure 9a, the coffee powder is filled only inside the two holes of the adapter. The number of holes or their shape, however, is not limiting.

For example, Figure 8b shows an adapter which again comprises a single body 100 designed to reduce the volume for receiving coffee power inside the funnel filter. However, the body 100 has only one hole. The hole is situated off-centre with respect to the centre of the funnel filter. The hole has an irregular polyhedron shape. When the parts (adapter/filter) are assembled together, as shown in Figure 9b, the coffee powder is filled only inside the hole of the adapter.

Similarly, Figure 8c shows an adapter which again comprises a single body 100 with a single hole. The hole is situated off-centre with respect to the centre of the funnel filter, but has a circular shape. The assembled parts are shown in Figure 9c.

Each of Figures 8d-8f also shows an adapter which comprises a single body 100; each adapter can be used singly inside the coffee pot. The body 100 of each adapter has a single hole. However, in these examples the hole is centred with respect to the centre of the funnel filter. The assembled parts are shown in Figures 9d-9f, respectively.

Figure 10 shows an adapter which comprises three bodies R1, R2, R3. The body R1 has a single hole, like the body 100 in Figure 9d, and in fact may be used separately from the other bodies R2, R3 inside the funnel filter. The hole of the body R1 is centred with respect to the centre of the funnel filter and has a circular shape. The body R2 also has a hole which is centred with respect to the centre of the funnel filter and has a circular shape. Similarly, the body R3 has a single hole which is centred with respect to the centre of the funnel filter and has a circular shape. The body R3 can be inserted concentrically inside the body R2 and, together with the body R2, can be inserted concentrically inside the body R1.

However, these shapes and concentric arrangements are not binding. For example, Figure 11 shows an adapter which comprises three bodies R1, R2, R3. The body R1 has a single hole and may be used separately from the other bodies R2, R3 inside the funnel filter. The hole in the body R1 is centred with respect to the centre of the funnel filter and does not have a circular shape. The body R2 also has a single hole which is not centred with respect to the centre of the funnel filter, but has a circular shape. The outer shape of the body R2 is not circular and does not correspond to the shape of the hole in the body R1. The body R2 can be inserted inside the body R1. The body R3 has a single hole which is not centred with respect to the centre of the funnel filter and does not have a circular shape. The outer shape of the body R3 is circular and corresponds to the shape of the hole in the body R2. The body R3 can be inserted inside the body R2 and, together with the body R2, can be inserted inside the body R1.

## Claims

1. Coffee pot or moka pot of the type comprising three main components:
- a boiler (1) designed to receive water to be heated;
- a funnel filter (2) which can be inserted inside the boiler (1); and
- a collector (3) which can be mounted on top of the boiler (1) and the funnel filter (2) and which is designed to collect coffee extracted by means of a flow of hot water from the boiler (1) across the funnel filter (2);
said funnel filter (2) comprising an upper cylindrical portion (21) of predefined height having a perforated base (22) for receiving the coffee powder, and a lower tube-shaped portion (23) having a proximal end (24) close to the bottom (11) of the boiler and an opposite distal end on the perforated base (22);
further including an adapter (100), the adapter (100) comprising at least one body (100) which can be inserted inside the upper cylindrical portion (21) of the filter, said body (100) comprising a through-hole (101), **characterized in that** said body (100) is configured to fill volume inside the upper cylindrical portion (21) of the funnel filter (21) and not to receive the coffee powder except in the said through-hole (101).

2. Coffee pot or moka pot according to claim 1, **characterized in that** said body (100) comprises at least one first ring (100) having an outer surface (102) configured to make contact with an inner surface (211) of the upper cylindrical portion (21) of the funnel filter (2).

3. Coffee pot or moka pot according to claim 2, **characterized in that** said first ring (100) comprises an inner surface (103) which, with said outer surface (102), forms a circular rim (104) of predefined thickness, said circular rim being designed to reduce the volume of the funnel filter (2) available for receiving the coffee powder, allowing the powder to be filled only inside a first central sector of the funnel filter (2), left free by the first ring (100).

4. Coffee pot or moka pot according to claim 3, **characterized in that** said first ring (100) is a solid body.

5. Coffee pot or moka pot according to claim 3, **characterized in that** said first ring (100) is a hollow body, and said inner surface (103) and said outer surface (102) are joined together by flat flanges (105), the flat flanges (105) comprise an upper flat flange (105a) which joins together the top ends (103a, 102a) of the inner surface (103) and the outer surface (102) of the first ring (100), and a lower flat flange (105b) which joins together the bottom ends of the inner surface (103) and the outer surface (102) of the first ring (100).

6. Coffee pot or moka pot according to claim 3, **characterized in that** said first ring (100) is made of metal, preferably stainless steel or aluminium alloy or food-grade plastic.

7. Coffee pot or moka pot according to claim 1, **characterized in that** it comprises at least one second ring concentric with the first ring (100) and able to be removably inserted inside the first ring (100), said second ring being designed to reduce the volume of the funnel filter (2) available for receiving the coffee powder, allowing the powder to be filled only inside a second central sector of the funnel filter (2) left free by the first ring and by the second ring.

8. Coffee pot or moka pot according to claims 5 and 7, **characterized in that** it comprises at least one third ring concentric with the second ring and able to be removably inserted inside the second ring in order to reduce further the volume of the funnel filter (2) available for receiving the coffee powder, allowing the powder to be filled only inside a third central sector of the funnel filter (2) left free by the first ring, by the second ring and by the third ring.

9. Coffee pot or moka pot according to claim 8, **characterized in that** said second ring and third ring are solid bodies or hollow bodies.

10. Coffee pot or moka pot according to claim 1 wherein said through-hole (101) has an axis parallel to the axis of the upper cylindrical portion (21) or being coaxial therewith.

11. Coffee pot or moka pot according to claim 1 wherein said through-hole (101) has a circular cross section.

12. Coffee pot or moka pot according to claim 1 wherein said through-hole (101) has a triangular, quadrangular or polyhedral cross section.

13. Coffee pot or moka pot according to claim 1 wherein said body (100) has a height equal to the height of the upper cylindrical portion (21).

14. Coffee pot or moka pot according to claim 1 wherein said body (100) is a ring having a base portion in contact with part of the perforated base (22) of said upper cylindrical portion (21) of the funnel filter (2), so as to prevent flow of fluid from the boiler (1) to the collector (2) through said part of the perforated base (22), an external lateral surface in contact with an internal lateral surface of the funnel filter (2) to prevent flow of fluid between said external lateral surface and said internal lateral surface, and a top portion flush with a top edge of the funnel filter (2), so as the coffee powder is filled only within the through-hole (101) and not on top of the ring and flow of fluid is allowed through a remaining part of the perforated base (22) which is free from the base portion of the ring.

## Patentansprüche

1. Eine Kaffeekanne oder Mokkakanne der Art, die drei Hauptkomponenten umfasst:
einen Kessel (1), der dazu bestimmt ist, Wasser zum Erhitzen aufzunehmen;
ein Trichterfilter (2), das in den Kessel (1) eingesetzt werden kann; und
einen Sammler (3), der oben auf den Kessel (1) und das Trichterfilter (2) montiert werden kann und der dazu bestimmt ist, den Kaffee zu sammeln, der durch einen Fluss von heißem Wasser aus dem Kessel (1) durch das Trichterfilter (2) extrahiert wird; wobei das Trichterfilter (2) einen oberen zylindrischen Abschnitt (21) von vordefinierter Höhe mit einem perforierten Boden (22) zur Aufnahme des Kaffeepulvers umfasst und einen unteren röhrenförmigen Abschnitt (23) aufweist, der ein proximales Ende (24) nahe dem Boden (11) des Kessels und ein gegenüberliegendes distales Ende auf dem perforierten Boden (22) aufweist; weiterhin umfasst es einen Adapter (100), wobei der Adapter (100) mindestens einen Körper (100) umfasst, der in den oberen zylindrischen Abschnitt (21) des Filters eingesetzt werden kann, wobei der Körper (100) ein Durchgangsloch (101) umfasst, **dadurch gekennzeichnet, dass** der Körper (100) so konfiguriert ist, dass er das Volumen im oberen zylindrischen Abschnitt (21) des Trichterfilters (2) ausfüllt und nicht das Kaffeepulver aufnimmt, außer in dem genannten Durchgangsloch (101).

2. Kaffeekanne oder Mokkakanne nach Anspruch 1, **dadurch gekennzeichnet, dass** der genannte Körper (100) mindestens einen ersten Ring (100) umfasst, dessen Außenfläche (102) so konfiguriert ist, dass sie Kontakt mit einer Innenfläche (211) des oberen zylindrischen Abschnitts (21) des Trichterfilters (2) aufnimmt.

3. Kaffeekanne oder Mokkakanne nach Anspruch 2, **dadurch gekennzeichnet, dass** der genannte erste Ring (100) eine Innenfläche (103) umfasst, die zusammen mit der Außenfläche (102) einen kreisförmigen Rand (104) von vordefinierter Dicke bildet, wobei der kreisförmige Rand dazu bestimmt ist, das Volumen des Trichterfilters (2) zu reduzieren, das für die Aufnahme des Kaffeepulvers zur Verfügung steht, sodass das Pulver nur in einem ersten zentralen Sektor des Trichterfilters (2) gefüllt werden kann, der durch den ersten Ring (100) freigelassen wird.

4. Kaffeekanne oder Mokkakanne nach Anspruch 3, **dadurch gekennzeichnet, dass** der genannte erste Ring (100) ein massiver Körper ist.

5. Kaffeekanne oder Mokkakanne nach Anspruch 3, **dadurch gekennzeichnet, dass** der genannte erste Ring (100) ein hohler Körper ist und die Innenfläche (103) und die Außenfläche (102) durch flache Flansche (105) miteinander verbunden sind, wobei die flachen Flansche (105) einen oberen flachen Flansch (105a) umfassen, der die oberen Enden (103a, 102a) der Innenfläche (103) und der Außenfläche (102) des ersten Rings (100) miteinander verbindet, und einen unteren flachen Flansch (105b), der die unteren Enden der Innenfläche (103) und der Außenfläche (102) des ersten Rings (100) miteinander verbindet.

6. Kaffeekanne oder Mokkakanne nach Anspruch 3, **dadurch gekennzeichnet, dass** der genannte erste Ring (100) aus Metall besteht, vorzugsweise aus rostfreiem Stahl oder Aluminiumlegierung oder lebensmittelechtem Kunststoff.

7. Kaffeekanne oder Mokkakanne nach Anspruch 1, **dadurch gekennzeichnet, dass** sie mindestens einen zweiten Ring umfasst, der konzentrisch mit dem ersten Ring (100) ist und der entfernbar innerhalb des ersten Rings (100) eingesetzt werden kann, wobei der zweite Ring dazu bestimmt ist, das Volumen des Trichterfilters (2) weiter zu reduzieren, das für die Aufnahme des Kaffeepulvers zur Verfügung steht, sodass das Pulver nur in einem zweiten zentralen Sektor des Trichterfilters (2) gefüllt werden kann, der durch den ersten Ring und den zweiten Ring freigelassen wird.

8. Kaffeekanne oder Mokkakanne nach den Ansprüchen 5 und 7, **dadurch gekennzeichnet, dass** sie mindestens einen dritten Ring umfasst, der konzentrisch mit dem zweiten Ring ist und der entfernbar innerhalb des zweiten Rings eingesetzt werden kann, um das Volumen des Trichterfilters (2) weiter zu reduzieren, das für die Aufnahme des Kaffeepulvers zur Verfügung steht, sodass das Pulver nur in einem dritten zentralen Sektor des Trichterfilters (2) gefüllt werden kann, der durch den ersten Ring, den zweiten Ring und den dritten Ring freigelassen wird.

9. Kaffeekanne oder Mokkakanne nach Anspruch 8, **dadurch gekennzeichnet, dass** der genannte zweite Ring und der dritte Ring massive Körper oder hohle Körper sind.

10. Kaffeekanne oder Mokkakanne nach Anspruch 1, wobei das genannte Durchgangsloch (101) eine Achse aufweist, die parallel zur Achse des oberen zylindrischen Abschnitts (21) verläuft oder mit dieser koaxial ist.

11. Kaffeekanne oder Mokkakanne nach Anspruch 1, wobei das genannte Durchgangsloch (101) einen kreisförmigen Querschnitt aufweist.

12. Kaffeekanne oder Mokkakanne nach Anspruch 1, wobei das genannte Durchgangsloch (101) einen dreieckigen, viereckigen oder polygonalen Querschnitt aufweist.

13. Kaffeekanne oder Mokkakanne nach Anspruch 1, wobei der genannte Körper (100) eine Höhe aufweist, die der Höhe des oberen zylindrischen Abschnitts (21) entspricht.

14. Kaffeekanne oder Mokkakanne nach Anspruch 1, wobei der genannte Körper (100) ein Ring ist, der einen Basisteil in Kontakt mit einem Teil des perforierten Bodens (22) des oberen zylindrischen Abschnitts (21) des Trichterfilters (2) hat, um den Fluss von Flüssigkeit vom Kessel (1) zum Sammler (3) durch den genannten Teil des perforierten Bodens (22) zu verhindern, eine äußere Seitenfläche, die mit einer inneren Seitenfläche des Trichterfilters (2) in Kontakt steht, um den Fluss von Flüssigkeit zwischen der genannten äußeren Seitenfläche und der genannten inneren Seitenfläche zu verhindern, und einen oberen Teil, der bündig mit einem oberen Rand des Trichterfilters (2) abschließt, sodass das Kaffeepulver nur innerhalb des Durchgangslochs (101) gefüllt wird und nicht auf den Ring, und der Fluss von Flüssigkeit durch einen verbleibenden Teil des perforierten Bodens (22), der vom Basisteil des Rings freigelassen wird, ermöglicht wird.

## Revendications

1. Cafetière ou cafetière italienne de type comprenant trois composants principaux :
- une bouilloire (1) conçue pour recevoir de l'eau à chauffer ;
- un filtre à entonnoir (2) qui peut être inséré à l'intérieur de la bouilloire (1) ; et
- un collecteur (3) qui peut être monté au-dessus de la bouilloire (1) et du filtre à entonnoir (2) et qui est conçu pour collecter le café extrait au moyen d'un écoulement d'eau chaude provenant de la bouilloire (1) à travers le filtre à entonnoir (2) ;
ledit filtre à entonnoir (2) comprenant une partie cylindrique supérieure (21) de hauteur prédéfinie ayant une base perforée (22) pour recevoir le café en poudre, et une partie inférieure en forme de tube (23) ayant une extrémité proximale (24) proche du fond (11) de la bouilloire et une extrémité distale opposée sur la base perforée (22) ;
comportant en outre un adaptateur (100), l'adaptateur (100) comprenant au moins un corps (100) qui peut être inséré à l'intérieur de la partie cylindrique supérieure (21) du filtre, ledit corps (100) comprenant un trou traversant (101),
**caractérisée en ce que** ledit corps (100) est configuré pour remplir le volume à l'intérieur de la partie cylindrique supérieure (21) du filtre à entonnoir (21) et pour ne pas recevoir le café en poudre sauf dans ledit trou traversant (101).

2. Cafetière ou cafetière italienne selon la revendication 1, **caractérisée en ce que** ledit corps (100) comprend au moins une première bague (100) présentant une surface externe (102) configurée pour entrer en contact avec une surface interne (211) de la partie cylindrique supérieure (21) du filtre à entonnoir (2).

3. Cafetière ou cafetière italienne selon la revendication 2, **caractérisée en ce que** ladite première bague (100) comprend une surface interne (103) qui, avec ladite surface externe (102), forme un rebord circulaire (104) d'épaisseur prédéfinie, ledit rebord circulaire étant conçu pour réduire le volume du filtre à entonnoir (2) disponible pour recevoir le café en poudre, ce qui permet de remplir la poudre uniquement à l'intérieur d'un premier secteur central du filtre à entonnoir (2), laissé libre par la première bague (100).

4. Cafetière ou cafetière italienne selon la revendication 3, **caractérisée en ce que** ladite première bague (100) est un corps solide.

5. Cafetière ou cafetière italienne selon la revendication 3, **caractérisée en ce que** ladite première bague (100) est un corps creux, et ladite surface interne (103) et ladite surface externe (102) sont reliées entre elles par des brides plates (105), les brides plates (105) comprennent une bride plate supérieure (105a) qui relie entre elles les extrémités supérieures (103a, 102a) de la surface interne (103) et de la surface externe (102) de la première bague (100), et une bride plate inférieure (105b) qui relie entre elles les extrémités inférieures de la surface interne (103) et de la surface externe (102) de la première bague (100).

6. Cafetière ou cafetière italienne selon la revendication 3, **caractérisée en ce que** ladite première bague (100) est en métal, de préférence en acier inoxydable ou en alliage d'aluminium ou en plastique de qualité alimentaire.

7. Cafetière ou cafetière italienne selon la revendication 1, **caractérisée en ce qu'**elle comprend au moins une deuxième bague concentrique à la première bague (100) et pouvant être insérée de manière amovible à l'intérieur de la première bague (100), ladite deuxième bague étant conçue pour réduire le volume du filtre à entonnoir (2) disponible pour recevoir le café en poudre, ce qui permet de remplir la poudre uniquement à l'intérieur d'un deuxième secteur central du filtre à entonnoir (2) laissé libre par la première bague et par la deuxième bague.

8. Cafetière ou cafetière italienne selon les revendications 5 et 7, **caractérisée en ce qu'**elle comprend au moins une troisième bague concentrique à la deuxième bague et pouvant être insérée de manière amovible à l'intérieur de la deuxième bague afin de réduire davantage le volume du filtre à entonnoir (2) disponible pour recevoir le café en poudre, ce qui permet de remplir la poudre uniquement à l'intérieur d'un troisième secteur central du filtre à entonnoir (2) laissé libre par la première bague, par la deuxième bague et par la troisième bague.

9. Cafetière ou cafetière italienne selon la revendication 8, **caractérisée en ce que** lesdites deuxième et troisième bagues sont des corps pleins ou des corps creux.

10. Cafetière ou cafetière italienne selon la revendication 1, dans laquelle ledit trou traversant (101) présente un axe parallèle à l'axe de la partie cylindrique supérieure (21) ou étant coaxial à celui-ci.

11. Cafetière ou cafetière italienne selon la revendication 1, dans laquelle ledit trou traversant (101) présente une section transversale circulaire.

12. Cafetière ou cafetière italienne selon la revendication 1, dans laquelle ledit trou traversant (101) présente une section transversale triangulaire, quadrangulaire ou polyédrique.

13. Cafetière ou cafetière italienne selon la revendication 1, dans laquelle ledit corps (100) présente une hauteur égale à la hauteur de la partie cylindrique supérieure (21).

14. Cafetière ou cafetière italienne selon la revendication 1, dans laquelle ledit corps (100) est une bague ayant une partie de base en contact avec une partie de la base perforée (22) de ladite partie cylindrique supérieure (21) du filtre à entonnoir (2), de manière à empêcher l'écoulement d'un fluide provenant de la bouilloire (1) vers le collecteur (2) à travers ladite partie de la base perforée (22), une surface latérale externe en contact avec une surface latérale interne du filtre à entonnoir (2) pour empêcher l'écoulement d'un fluide entre ladite surface latérale externe et ladite surface latérale interne, et une partie supérieure alignée avec un bord supérieur du filtre à entonnoir (2), de manière à ce que le café en poudre soit rempli uniquement à l'intérieur du trou traversant (101) et non au-dessus de la bague et que l'écoulement d'un fluide soit permis à travers une partie restante de la base perforée (22) qui est libre par rapport à la partie de base de la bague.
